**Europäisches Patentamt**

**European Patent Office**

**Office européen des brevets**

(11) Veröffentlichungsnummer: **0 034 713**
**A1**

(12) # EUROPÄISCHE PATENTANMELDUNG

(21) Anmeldenummer: 81100562.8

(22) Anmeldetag: 27.01.81

(51) Int. Cl.³: **B 23 C 3/28**
**G 01 N 1/28**

(30) Priorität: 21.02.80 DE 3006460

(43) Veröffentlichungstag der Anmeldung:
02.09.81 Patentblatt 81/35

(84) Benannte Vertragsstaaten:
FR GB SE

(71) Anmelder: **Institut Dr. Friedrich Förster Prüfgerätebau**
**Postfach 925 In Laisen 70**
**D-7410 Reutlingen(DE)**

(72) Erfinder: **Häberlein, Peter**
**Oferdinger Strasse 23**
**D-7410 Reutlingen 24(DE)**

(72) Erfinder: **Breitmaier, Paul**
**Dorfstrasse 36/1**
**D-7402 Kirchentellinsfurt(DE)**

(54) **Anordnung und Verfahren zum Herstellen von Einschnitten an Metallteilen.**

(57) Die Anordnung dient zum Herstellen von Einschnitten bestimmter Tiefe, insbesondere von Musterfehlern, im Innern von langgestreckten Hohlräumen an Metallteilen (3), z.B. im Innern von Rohren. Sie besteht aus einem langen, vorzugsweise zylindrischen Tragkörper (22), der an einem Ende mit einer Kreissäge ausgestattet ist, der an seinem anderen Ende eine Antriebswelle und in seinem Inneren Übertragungselemente zur Verbindung der Antriebswelle mit der Kreissäge besitzt, aus einer Verstelleinrichtung (1) mit deren Hilfe Tiefe und Länge eines Einschnittes eingestellt werden können und die am hinteren, außerhalb des Hohlraums befindlichen Teil des Tragkörpers (22) angreift und aus einem kraftschlüssig mit der Antriebswelle verbundenen Antrieb (21). Ein Verfahren zum Betrieb der Anordnung besteht darin, daß das Metallteil (3) elektrisch isoliert gelagert wird und daß über einen leistungslosen Schalter mit nachgeschalteter Anzeigelampe der Nullpunkt der Verstelleinrichtung bei Kontakt der Säge mit dem Metallteil (3) durch ein Lichtsignal der Anzeigelampe gemeldet wird.

./...

Croydon Printing Company Ltd

Fig. 1

Anmelder: Institut Dr. Friedrich Förster Prüfgerätebau
Unser Zeichen: A 286

----------------------------------------------------------------

Anordnung und Verfahren zum Herstellen von Einschnitten
an Metallteilen

----------------------------------------------------------------

Die Erfindung betrifft eine Anordnung zum Herstellen von
Einschnitten bestimmter Tiefe, insbesondere von Musterfehlern, im Inneren von langgestreckten Hohlräumen an
Metallteilen, z. B. im Inneren von Rohren, mit einem
zum Einführen in den Hohlraum geeigneten langen, vorzugsweise zylindrischen Tragkörper, mit einer am im
vorderen, im Inneren des Hohlraumes befindlichen Ende
des Tragkörpers gelagerten ersten Welle und einem mit
dieser kraftschlüssig verbundenen kreisförmigen Sägeblatt, dessen Umfang einseitig über die Kontur des Tragkörpers hinausragt, mit einer am im hinteren, außerhalb
des Hohlraumes befindlichen Ende des Tragkörpers gelagerten zweiten Welle und damit verbundenen Antriebsmitteln, mit Übertragungsmitteln zum Koppeln der beiden
Wellen untereinander sowie mit Mitteln zum Verstellen
des Sägeblattes in Richtung der Tiefe und der Längserstreckung des Einschnittes. Die Erfindung betrifft ferner ein Verfahren zum Herstellen von Einschnitten bestimmter Tiefe, insbesondere von Musterfehlern, an einem Metallteil unter Anwendung der obigen Anordnung.

Eine Anordnung der genannten Art ist bekannt und am
Markt erhältlich. Sie dient zur Anfertigung von Musterfehlern an der Innenwand von Metallrohren. Unter Muster-

- 2 -

fehlern versteht man hier Einschnitte bestimmter Tiefe, Breite und Länge, mit anderen Worten künstliche Fehler, mit deren Hilfe natürliche Fehler simuliert werden können. Rohrstücke mit Musterfehlern werden zur Einstellung und Eichung von Fehlerprüfeinrichtungen, wie z. B. Wirbelstromprüfanlagen, von den Herstellern und Benutzern solcher Einrichtungen benötigt. Die o. g. am Markt erhältliche Anordnung besitzt einen zylindrischen Grundkörper, der in die Bohrung des zu bearbeitenden Rohres eingebracht und mit dem letzteren starr verbunden wird. Am aus dem Rohr herausragenden hinteren Ende des Grundkörpers ist seitlich ein Antriebsmotor rechtwinklig angeflanscht. Eine seitliche Öffnung am entgegengesetzten Ende des Grundkörpers gibt den Zugang zu einer kleinen, in einem Schlitten gelagerten, Kreissäge frei, deren Achse quer zur Achse des Grundkörpers verläuft und die über ein Gestänge mit dem Antriebsmotor verbunden ist. Der Schlitten ist sowohl senkrecht als auch parallel zur Achse des Grundkörpers bzw. des Rohres verstellbar. Die Verstellung des Schlittens und damit die Tiefe und die Länge eines von der Kreissäge angefertigten Einschnittes in der Rohrwand kann vom außen gelegenen Ende des Grundkörpers aus über Gestänge gesteuert werden.

Die beschriebene Anordnung hat, obwohl sie in vielen Fällen zufriedenstellend arbeitet, in der Praxis deutliche Grenzen ihres Anwendungsbereiches erkennen lassen, für deren Überwindung ein starkes Bedürfnis besteht. So liegt der kleinste Innendurchmesser, bei dem noch Musterfehler angefertigt werden können, bei etwa 85 mm. Er läßt sich durch konstruktive Maßnahmen nur noch geringfügig verringern, da sich Schlitten und Schlittenführung nicht beliebig verkleinern lassen. Andererseits ist die Genauigkeit und Reproduzierbarkeit der Einschnittiefe häufig nicht ausreichend. Dies hängt zum einen mit der

- 3 -

Übertragung der Einstellgröße für die Einschnittiefe über ein Gestänge zusammen, zum anderen damit, daß eine exakte Festlegung des Nullpunktes, von dem aus die Zustellung der Säge um den Betrag der gewünschten Einschnittiefe erfolgen soll, nicht möglich ist.

Die Erfindung stellt sich demgegenüber die Aufgabe, eine Anordnung der eingangs beschriebenen Art wie auch ein Verfahren zu deren Anwendung zu schaffen, die eine Erweiterung des Anwendungsbereiches in Richtung auf kleinere Innendurchmesser des zu bearbeitenden Hohlraumes sowie auf größere Genauigkeit und Reproduzierbarkeit der Tiefe der hergestellten Einschnitte ermöglicht.

Die Aufgabe wird gelöst durch eine Anordnung und durch ein Verfahren, die gemäß Patentanspruch 1 bzw. 4 gekennzeichnet sind.

Durch das Herausnehmen der Verstelleinrichtung aus dem Hohlraum werden vor allem zwei Dinge bewirkt. Zum einen fallen im in den Hohlraum einzuführenden Teil der Anordnung der Schlitten, eine den Schlitten führende Schiene und die zugehörigen Übertragungsgestänge für die Verstellung fort, sodaß nur noch die Säge und die Mittel zur Übertragung der Antriebsleistung für die Säge übrig bleiben. Dadurch gelingt es, die Anordnung für sehr enge Hohlräume noch anwendbar zu machen, z. B. für Bohrungen bis 20 mm Durchmesser. Zum anderen ist man mit der Verstelleinrichtung außerhalb des Hohlraumes nicht mehr den starken räumlichen Einschränkungen unterworfen, die bisher dem Erreichen einer höheren Einstellgenauigkeit im Wege standen. Vielmehr können jetzt sehr genau arbeitende und dennoch robuste Verstelleinrichtungen eingesetzt werden. Das erfindungsgemäße Verfahren macht es möglich, die optisch verdeckt liegende Säge mit bisher unerreichter Präzision auf den Nullpunkt einzustellen, von dem ausgehend ein Sägeschnitt technologisch als "Fehler" zu wirken beginnt, bzw. von dem ausgehend ein Sägeschnitt von den bekannten Fehlerprüfgeräten als "Fehler" erfaßt wird. Das gilt unvermindert auch dann, wenn die von der Säge zu bearbeitende Oberfläche des Metallteils verschmutzt oder verzundert ist.

Die Erfindung soll im folgenden durch ein Beispiel und an Hand von Figuren näher erläutert werden. Es zeigen im einzelnen:

Figur 1 - eine erfindungsgemäße Anordnung in Seitenansicht

Figur 2 - ein Detail daraus, vergrößert und in Draufsicht.

Figur 3 - eine Schaltskizze

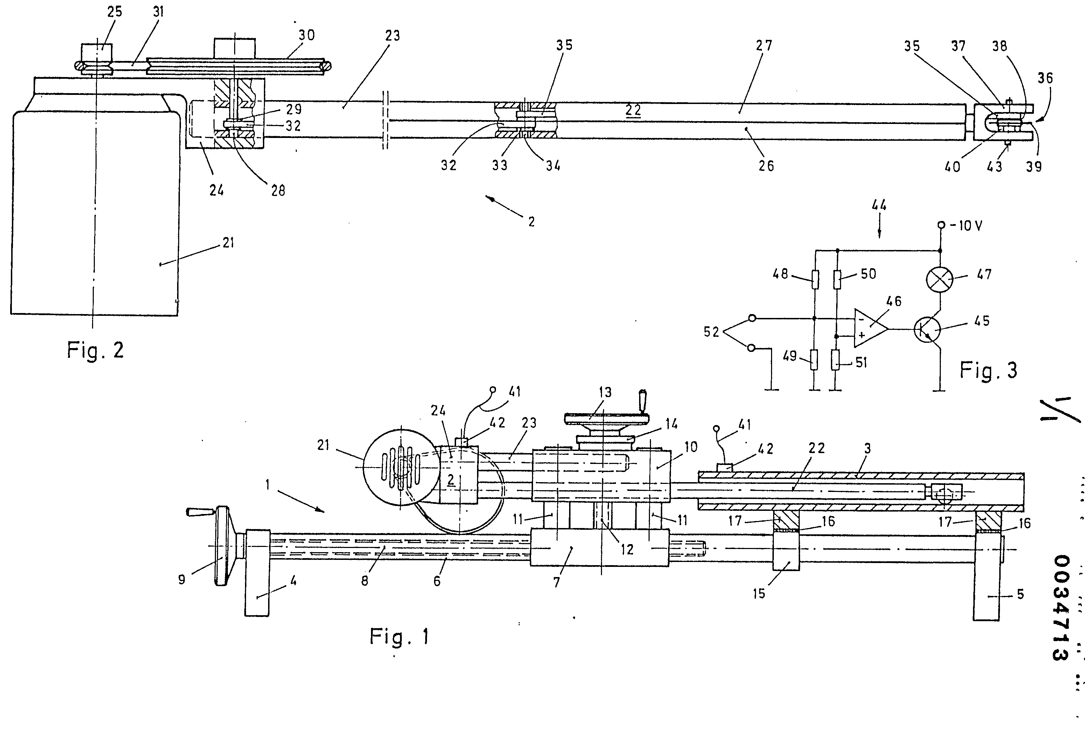

Die Anordnung nach Figur 1 kann unterteilt werden in eine Verstelleinrichtung 1, eine Sägeeinrichtung 2 und das zu bearbeitende Metallteil, ein Rohr 3, in dessen Innenwand in Längsrichtung des Rohres verlaufende Musterfehler eingesägt werden sollen. Die Verstelleinrichtung 1 dient zum Verstellen der Sägeeinrichtung 2 in Längs- und Querrichtung und ist mit Mitteln zum Lagern des zu bearbeitenden Metallteils ausgestattet. Zwei Wandstücke 4 und 5 bilden das Fundament der Verstelleinrichtung 1. Sie werden von zwei Säulen 6 zusammengehalten, von denen nur die vordere sichtbar ist. Ein Laufschlitten 7 gleitet mit seinen Bohrungen auf den Säulen 6 und wird in seiner Längsbewegung angetrieben von einer Spindel 8, die zwischen den beiden Säulen 6 angeordnet ist und in starrer Verbindung mit einem Handrad 9 steht. Ein Hubschlitten 10 ist mittels zweier Säulen 11 am Laufschlitten 7 gelagert und kann mittels einer Spindel 12 und eines damit verbundenen Handrades 13 gegenüber dem Laufschlitten 7 gehoben und gesenkt werden. Die Einstellung des Handrades 13 kann an einer Skalentrommel 14 exakt abgelesen werden. Zur Lagerung der zu bearbeitenden Metallteile ist ein Balken 15 vorgesehen, der auf den Säulen 6 gleitet und dort arretiert werden kann. Auf der Oberseite von Balken 15 und Wandstück 5 sind zwei Prismenstücke 17 befestigt, auf denen das Rohr 3 gelagert ist und die gegenüber dem Balken 15 und dem Wandstück 5 durch eine Isolierschicht 16 elektrisch isoliert sind.

Die Sägeeinrichtung 2 wird vom Hubschlitten 10 der Verstelleinrichtung 1 getragen. Sie ist in Figur 2 noch einmal gesondert dargestellt und zwar in gegenüber Figur 1 vergrößertem Maßstab und in Draufsicht. Zur Sägeeinrichtung 2 gehören im wesentlichen ein Antriebsmotor 21, ein Tragkörper 22, ein Sicherungsstab 23 und ein Montagebügel 24, durch den die vorher genannten Teile untereinander verbunden sind. Der zylindrische Tragkörper 22 und der Sicherungsstab 23 sind mit ihrem hinteren Ende in Bohrungen des Montagebügels 24 eingebaut, sie ruhen im übrigen in Bohrungen des Hubschlittens 10. Dabei dient der Sicherungsstab 23 einerseits zur Verstärkung der Konstruktion, andererseits zur Absicherung der korrekten Lage des Tragkörpers 22 gegenüber dem Hubschlitten 10. Der Antriebsmotor 21, ein Elektromotor, treibt die Sägeeinrichtung 2 an und ist am Montagebügel 24 befestigt. Die Antriebsleistung kann am Treibrad 25 des Motors 21 abgenommen werden. Der Tragkörper 22 besteht aus zwei trennbaren Schalen 26, 27, die zusammengesetzt einen hohlen Zylinder ergeben. Am hinteren Ende des Tragkörpers 22 ist eine Welle 28 gelagert, auf die im Inneren des Tragkörpers ein Zahnrad 29, außen ein Rad 30 montiert ist. Rad 30 ist über einen elastischen Treibriemen 31 mit dem Treibrad 25

- 6 -

verbunden und setzt aufgrund seiner Größe die Umlaufdrehzahl an Welle 28 auf ein gewünschtes Maß herab. Über einen Zahnriemen 32, ein Doppelzahnrad 33 auf einer Welle 34 und einen weiteren Zahnriemen 35 wird die Antriebsleistung vom Zahnrad 29 auf einen Sägeflansch 36 übertragen, der in einem Gabelkopf 37 am vorderen Ende des Tragrohres 22 eingebaut ist. Der Sägeflansch 36 besteht aus einem Ritzel 38 zur Kopplung mit dem Zahnriemen 35, einem Sägeblatt 39, einer Mutter 40 zum Festziehen des Sägeblattes 39 und ist auf eine Hohlwelle aufgebaut, die auf einer Achse 43 läuft. Durch Herausziehen der Achse 43 läßt sich der Sägeflansch 36 zum Auswechseln des Sägeblattes 39 aus dem Gabelkopf 37 entfernen.

Für die Ermittlung des Nullpunktes beim Einbringen eines Sägeeinschnittes in die Innenwand des Rohres 3 können noch zwei elektrische Anschlußleitungen 41 mit magnetischen Kontaktclips 42 zum Kontaktieren der Anschlußleitungen 41 mit dem Rohr 3 bzw. der Sägeeinrichtung 2 vorgesehen sein, ferner eine an die Anschlußleitungen 41 angeschlossene leistungslose Schalteinrichtung mit einer nachgeschalteten Anzeigeeinrichtung. Nach Figur 3 kann die Schalteinrichtung 44 in einem Transistor 45 und einem diesen steuernden Operationsverstärker 46, die Anzeigeeinrichtung in einer vom Transistor 45 geschalteten Lampe 47 bestehen. In diesem Falle müssen die beiden Teiler 48, 49 und 50, 51 so dimensioniert sein, daß der Teiler 48, 49 am invertierenden Eingang des Operationsverstärkers 46 ein höheres Potential herstellt, sodaß Operationsverstärker 46 sowie Transistor 45 gesperrt sind und die Lampe 47 dunkel bleibt. Durch Kurzschließen des Widerstandes 49 über die Anschlußleitungen 41 wird am nichtinvertierenden Eingang des Operationsverstärkers ein höheres Potential erzeugt und die Lampe 47 zum Aufleuchten gebracht.

- 7 -

Beim Herstellen eines Musterfehlers in einem Rohr 3 mit Hilfe der beschriebenen Anordnung geht man folgendermaßen vor. Zunächst setzt man in den Sägeflansch 36 je nach der gewünschten Breite des Musterfehlers ein entsprechend dickes Sägeblatt 39 ein. Man schiebt das zu bearbeitende Rohr 3 auf die beiden Prismenstücke 17 und befestigt sie dort, ohne daß elektrischer Kontakt zwischen dem Rohr 3 und seiner Lagerung entsteht. Dann führt man mit Hilfe von Handrad 9 die Sägeeinrichtung 2 soweit in das Rohr 3 ein, daß das Sägeblatt 39 berührungsfrei der Stelle des gewünschten Einschnittes gegenübersteht. Die Clips 42 werden mit dem Rohr 3 bzw. der Sägeeinrichtung 2 kontaktiert, die Anschlußleitungen 41 mit den Eingangsklemmen 52 der Schalteinrichtung 44 verbunden. Der Antriebsmotor 21 wird in Gang gesetzt. Mittels Handrad 13 wird nun der Hubschlitten 10 behutsam solange abwärts bewegt, bis das Aufleuchten der Lampe 47 einen metallischen Kontakt zwischen dem Sägeblatt 39 und der Innenwand des Rohres 3 meldet. Die beschriebene Nullpunkteinstellung läßt sich bei guter Reproduzierbarkeit mit großer Genauigkeit (z. B. ± 0,01 mm) durchführen. Da nur metallischer Kontakt zu einer Anzeige führt, stört Verschmutzung oder Verzunderung nicht. Zum Einstellen der Tiefe des Musterfehlers verstellt man anschließend mittels Handrad 13 die Sägeeinrichtung 2 um den gewünschten Betrag der Fehlertiefe in der vorherigen Richtung weiter, wobei die Skalatrommel 14 eine genaue Ablesung der Vertikalverstellung, z. B. in einer Teilung von jeweils 0,01 mm, ermöglicht. Die vorgesehene Länge des herzustellenden Musterfehlers erhält man durch eine entsprechende Horizontalverstellung der Sägeeinrichtung 2 mittels Handrad 9, natürlich ebenfalls bei laufender Säge.

Von großer Bedeutung ist es, daß zur Kontrolle der Nullpunkteinstellung eine Schalteinrichtung benutzt wird, deren Steuerleistung vernachlässigbar klein ist. Sie sollte jedenfalls so klein sein, daß zwischen Sägeblatt 39 und Metallteil 3 eine nennenswerte Funkenbildung nicht auftreten kann. Würde man die Bildung von Funken zulassen, etwa indem man, was an sich näher gelegen hätte, den Strom zum Betrieb einer Anzeigelampe unmittelbar über den Kontakt zwischen Sägeeinrichtung 2 und Metallteil 3 fließen ließe, so würden durch Funkenerosion in kürzester Zeit die Schneidespitzen des Sägeblattes 39 abgetragen. Die Folge wäre ein schnelles Stumpfwerden des Sägeblattes 39 und eine wesentlich verringerte Genauigkeit der Nullpunkteinstellung. Selbstverständlich kann neben der beschriebenen Schalt- und Anzeigeeinrichtung nach Figur 3 jede andere mit entsprechenden Eigenschaften benutzt werden, u. a. etwa eine von einem Feldeffekttransistor gesteuerte lichtemittierende Diode (LED). Normalerweise ergeben sich für den Stromdurchgang vom rotierenden Sägeblatt 39 zum feststehenden Teil der Sägeeinrichtung 2 keine Schwierigkeiten. Werden jedoch anstelle des Gleitlagers Wälzlager für die Lagerung des Sägeflansches 36 eingesetzt, so kann man die möglicherweise entstehende Unterbrechung des elektrischen Kontaktes zwischen Sägeblatt und feststehendem Teil der Sägeeinrichtung 2 leicht durch einen einfachen Schleiffederkontakt überbrücken, der im Gabelkopf 37 befestigt ist und auf den umlaufenden Sägeflansch 36 auffedert.

Anmelder: Institut Dr. Friedrich Förster Prüfgerätebau
Unser Zeichen: A 286

---------------------------------------------------------

Anordnung und Verfahren zum Herstellen von Einschnitten
an Metallteilen

---------------------------------------------------------


Patentansprüche


1) Anordnung zum Herstellen von Einschnitten bestimmter Tiefe, insbesondere von Musterfehlern, im Inneren von langgestreckten Hohlräumen an Metallteilen, z. B. im Inneren von Rohren, mit einem zum Einführen in den Hohlraum geeigneten langen, vorzugsweise zylindrischen Tragkörper, mit einer am im vorderen, im Inneren des Hohlraumes befindlichen Ende des Tragkörpers gelagerten ersten Welle und einem mit dieser kraftschlüssig verbundenen kreisförmigen Sägeblatt, dessen Umfang einseitig über die Kontur des Tragkörpers hinausragt, mit einer am im hinteren, außerhalb des Hohlraumes befindlichen Ende des Tragkörpers gelagerten zweiten Welle und damit verbundenen Antriebsmitteln, mit Übertragungsmitteln zum Koppeln der beiden Wellen untereinander, sowie mit Mitteln zum Verstellen des Sägeblattes in Richtung der Tiefe und der Längserstreckung des Einschnittes, dadurch gekennzeichnet,

daß die Mittel (7-13) zum Verstellen des Sägeblattes (39) nur am hinteren, außerhalb des Hohlraumes befindlichen Teil des Tragkörpers (2) angreifen.

2) Anordnung nach Anspruch 1, dadurch gekennzeichnet,

daß als Übertragungsmittel zwei in Kaskade geschaltete Antriebsriemen (32, 35) im Inneren des Tragkörpers (2) vorgesehen sind.

3) Anordnung nach Anspruch 1 oder 2, dadurch gekennzeichnet,

daß der Tragkörper (2) zum Auswechseln der Antriebsriemen (32, 35) in Längsrichtung teilbar ist.

4) Verfahren zum Herstellen von Einschnitten bestimmter Tiefe, insbesondere von Musterfehlern, an einem Metallteil unter Anwendung der Anordnung nach Anspruch 1, dadurch gekennzeichnet,

daß das Metallteil (3) gegenüber dem Sägeblatt (39) elektrisch isoliert gelagert wird, daß man das Metallteil (3) einerseits und das Sägeblatt (39) andererseits elektrisch mit den Eingangsklemmen (52) eines leistungslosen Schalters (44) verbindet, an dessen Ausgang eine Anzeigeeinrichtung (47) angeschlossen ist, daß man bei umlaufendem Sägeblatt (39) die Mittel (7-13) zum Verstellen des Sägeblattes (39) solange in Richtung der Tiefe des Einschnittes verstellt bis eine Anzeige an der Anzeigeeinrichtung erfolgt und daß man von diesem Punkt ausgehend das Sägeblatt (39) um den genauen Betrag der gewünschten Tiefe des Einschnittes zustellt.

5) Verfahren nach Anspruch 4, dadurch gekennzeichnet,

daß über einen Schleifkontakt die elektrische Verbindung zwischen dem rotierenden Sägeblatt (39) und dem feststehenden Teil der Anordnung hergestellt wird.

0034713

Fig. 3

Fig. 1

Fig. 2

**Europäisches Patentamt**

## EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| **Kategorie** | Kennzeichnung des Dokuments mit Angabe, soweit erforderlich, der maßgeblichen Teile | betrifft Anspruch | |
| | US - A - 3 403 597 (W.R. BECKMAN et al.) <br> * Ansprüche 1, 9, Spalte 1, Zeilen 13 bis 51; Spalte 2, Zeile 33 bis Spalte 4, Zeile 19; Fig. 2 * <br> -- | 1,4 | B 23 C   3/28 <br> G 01 N   1/28 |
| | DE - B2 - 2 552 259 (KAPP & CO.) <br> * Spalte 2, Zeilen 28 bis 46; Spalte 3, Zeilen 6 bis 18; Fig. 2 * <br> -- | 1,2 | |
| | GB - A - 1 200 421 (COMMISSARIAT A L'ENERGIE ATOMIQUE) <br> * Ansprüche 1 bis 3, 8; Seite 1, Zeilen 10 bis 27; Seite 3, Zeilen 10, 11 * <br> -- | 1 | **RECHERCHIERTE SACHGEBIETE (Int. Cl.³)** <br><br> B 23 C   3/00 <br> B 23 D   21/14 <br> B 23 D   45/00 |
| A | US - A - 3 153 281 (R.P. BLOOMER) <br> -- | | B 24 B   19/02 <br> G 01 N   1/00 |
| A | US  - A - 2 319 582 (G.B. CARROLL) <br> -- | | |
| A | DE - U - 1 692 354 (K.E. WITZIG et al.) <br> -- | | |
| A | DE - C - 1 137 651 (AG BBC & CIE) <br> ---- | | **KATEGORIE DER GENANNTEN DOKUMENTE** <br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

X  Der vorliegende Recherchenbericht wurde für alle Patentansprüche erstellt.

| Recherchenort | Abschlußdatum der Recherche | Prüfer |
|---|---|---|
| Berlin | 18-05-1981 | MARTIN |

EPA form 1503.1   06.78